(19) Europäisches Patentamt
European Patent Office
Office européen des brevets

(11) **EP 1 741 736 B1**

(12) **EUROPÄISCHE PATENTSCHRIFT**

(45) Veröffentlichungstag und Bekanntmachung des Hinweises auf die Patenterteilung:
**13.01.2010 Patentblatt 2010/02**

(51) Int Cl.:
***C08G 18/44*** *(2006.01)*     ***C08G 18/65*** *(2006.01)*
***C08G 18/10*** *(2006.01)*     ***C08G 18/76*** *(2006.01)*

(21) Anmeldenummer: **06013078.8**

(22) Anmeldetag: **24.06.2006**

(54) **Verfahren zur Herstellung von sedimentationsstabilen NCO-Prepolymeren und ihre Verwendung**

Process for preparing NCO prepolymers that are stable against sedimentation and their use

Procédé de préparation des prépolymères à groupement NCO qui sont stables à la sédimentation et leur utilisation

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.07.2005 DE 102005031977**

(43) Veröffentlichungstag der Anmeldung:
**10.01.2007 Patentblatt 2007/02**

(73) Patentinhaber: **Bayer MaterialScience AG**
**51368 Leverkusen (DE)**

(72) Erfinder:
• **Nefzger, Hartmut, Dr.**
**50259 Pulheim (DE)**
• **Schmidt, Manfred, Dr.**
**41540 Dormagen (DE)**
• **Barnes, James-Michael**
**53547 Breitscheid (DE)**
• **Felske, Ernst**
**41464 Neuss (DE)**
• **Krause, Jens, Dr.**
**51063 Köln (DE)**

(56) Entgegenhaltungen:
**EP-A- 0 358 555**    **EP-A- 0 590 420**
**EP-A- 1 443 066**    **US-A1- 2005 143 551**

Bemerkungen:
Die Akte enthält technische Angaben, die nach dem Eingang der Anmeldung eingereicht wurden und die nicht in dieser Patentschrift enthalten sind.

EP 1 741 736 B1

**Beschreibung**

Die vorliegende Erfindung betrifft ein Verfahren zur Herstellung von sedimentationsstabilen NCO-Prepolymeren auf Basis von Polyethercarbonatpolyolen und ihre Verwendung.

Polyethercarbonatpolyole auf Basis von Hexandiolether werden entsprechend dem Stand der Technik (US 4 808 691) mit Polyisocyanat im molaren Überschuss, meist 4,4'-Diphenylmethandiisocyanat, zu Isocyanatprepolymeren mit endständigen NCO-Gruppen ("NCO-Prepolymere") umgesetzt, welche ihrerseits wichtige Rohstoffe zur Herstellung von Polyurethan-Gießelastomeren sind.

Polyethercarbonatpolyole sind überwiegend bifunktionelle, hydroxylgruppenterminierte Polyole, die sowohl Carbonatgruppen als auch Ethergruppen aufweisen. Polyethercarbonatpolyole werden entsprechend dem Stand der Technik unter Verwendung von z.B. Diphenylcarbonat oder Dimethylcarbonat oder Kohlensäuredichlorid in einer Kondensationsreaktion hergestellt, wobei Gemische aus ethergruppenaufweisenden Diolen, die durch saure Kondensation von Diolen hergestellt werden, und unveretherten Diolen eingesetzt werden.

Nachteilig an den oben genannten, auf 4,4'-Diphenylmethandiisocyanat und Hexandiolethercarbonatpolyolen basierenden NCO-Prepolymeren ist, dass diese beim Lagern bei Raumtemperatur ein Sediment bilden. Eine Erhöhung der Lagertemperatur ergibt keine Abhilfe, da dann die Viskosität stark ansteigt, wodurch die NCO-Prepolymere letztendlich unbrauchbar werden. Gleiches gilt auch, wenn man einmal abgekühlte und somit sedimenthaltige NCO-Prepolymere wieder erwärmt. Dieser gebildete Niederschlag führt bei der weiteren Umsetzung zu Inhomogenitäten im fertigen Gießelastomer, die wiederum Anlaß für Materialversagen sein können.

Es bestand daher die Aufgabe, diese NCO-Prepolymere so herzustellen, dass sich beim Lagern bei Raumtemperatur kein Niederschlag mehr bildet bzw. absetzt.

Es wurde nun überraschend gefunden, dass sich die oben beschriebenen NCO-Prepolymere auf Basis von Polyethercarbonatpolyolen sedimentationsstabil herstellen lassen, wenn dem Polyethercarbonatpolyol vor der Umsetzung mit 4,4'-Diphenylmethandiisocyanat bestimmte Polyole zugemischt werden.

Gegenstand der Erfindung ist ein Verfahren zur Herstellung von bei Raumtemperatur sedimentationsstabilen NCO-terminierten Prepolymeren auf Basis von Polyethercarbonatpolyolen und 4,4'-Diphenylmethandiisocyanat, dadurch gekennzeichnet, dass

a) mindestens ein Polyethercarbonatpolyol mit einem Molekulargewicht von 1000 bis 4000 g/mol mit mindestens einem Polyol aus der Gruppe bestehend aus
Propandiol-1,2, Propandiol-1,3, Glycerin, Butandiol-2,3, Butandiol-1,3, 2-Methylpropandiol-1,3, Pentandiol-1,2, Pentandiol-1,3, Pentandiol-1,4, Pentandiol-1,5, 2,2-Dimethyl-propandiol-1,3, 2-Methylbutandiol-1,4, 2-Methylbutandiol-1,3, 1,1,1-Trimethylolethan, 3-Methyl-1,5-Pentandiol und dessen Strukturisomere, 1,1,1-Trimethylolpropan, 1,7-Heptandiol, 2-Ethyl-1,6-Hexandiol, 1,9-Nonandiol, 1,11-Undecandiol, Diethylenglykol, Triethylenglykol, Oligoethylenglykol, 2,2'-Thiodiglykol, aus 1,2-Propylenoxid hergestellten Di- bzw. Polyglykole, Propylenglykole, Di-, Tri- und Tetrabutylenglykol, Di-, Tri- und Tetrahexylenetherglykol, 1,4-Cyclohexandiol, 1,3-Cyclohexandiol, sowie Umsetzungsprodukte der vorgenannten Verbindungen mit Ethylen- und/oder Propylenoxid im Molverhältnis von 1:1 1 bis 1:5, vermischt wird wobei die Mischung die in Anspruch 1 gennante Hydroxylzahl aufweist, und

b) dieses Gemisch anschließend mit einem stöchiometrischen Überschuss an 4,4'-Diphenylmethandiisocyanat umgesetzt wird.

Ein weiterer Gegenstand der Erfindung sind bei Raumtemperatur sedimentationsstabile NCO-terminierte Prepolymere mit einem NCO-Gehalt von 5-15 Gew.% auf Basis von Polyethercarbonatpolyolen und 4,4'-Diphenylmethandiisocyanat, erhältlich durch Umsetzung von

a) mindestens ein Polyethercarbonatpolyol mit einem Molekulargewicht von 1000 bis 4000 g/mol mit mindestens einem Polyol aus der Gruppe bestehend aus
Propandiol-1,2, Propandiol-1,3, Glycerin, Butandiol-2,3, Butandiol-1,3, 2-Methylpropandiol-1,3, Pentandiol-1,2, Pentandiol-1,3, Pentandiol-1,4, Pentandiol-1,5, 2,2-Dimethyl-propandiol-1,3, 2-Methylbutandiol-1,4, 2-Methylbutandiol-1,3, 1,1,1-Trimethylolethan, 3-Methyl-1,5-Pentandiol und dessen Strukturisomere, 1,1,1-Trimethylolpropan, 1,7-Heptandiol, 2-Ethyl-1,6-Hexandiol, 1,9-Nonandiol, 1,11-Undecandiol, Diethylenglykol, Triethylenglykol, Oligoethylenglykol, 2,2'-Thiodiglykol, aus 1,2-Propylenoxid hergestellten Di- bzw. Polyglykole, Propylenglykole, Di-, Tri- und Tetrabutylenglykol, Di-, Tri- und Tetrahexylenetherglykol, 1,4-Cyclohexandiol, 1,3-Cyclohexandiol, sowie Umsetzungsprodukte der vorgenannten Verbindungen mit Ethylen- und/oder Propylenoxid im Molverhältnis von 1:1 1 bis 1:5, wobei die Mischung die in Anspruch 1 gennante Hydroxylzahl aufweist, mit

b) einem stöchiometrischen Überschuss an 4,4'-Diphenylmethandiisocyanat.

Die Mischung aus Polyethercarbonatpolyol und zugesetztem Polyol oder Polylgemisch weist vorzugsweise eine Hydroxylzahl auf, die um mindestens 3 und höchstens 15 Hydroxyleinheiten höher ist als die des Polyethercarbonatpolyols.

"Sedimentationsstabil" bedeutet im Zusammenhang mit der Erfindung, dass die NCO-Prepolymere auch nach dreiwöchiger Lagerung bei 23°C kein Sediment aufweisen.

Vorzugsweise werden solche Polyole zum Polyethercarbonatpolyol zugesetzt, die nicht zum Aufbau des Polyethercarbonatpolyols selbst verwendet worden sind. Besonders bevorzugt sind Polyole, die mindestens 3 Kohlenstoffatome und höchstens 32 Kohlenstoffatome aufweisen. Die Kohlenstoffatome können sowohl in linearer Kette als auch in verzweigter Form oder cycloaliphatisch angeordnet sein. Die Kohlenstoffkette kann auch durch Heteroatome, bevorzugt Sauerstoff- oder Schwefelatome unterbrochen sein.

Die Hydroxylgruppen der Polyole können bevorzugt primär oder sekundär sein. Die Polyole sollten höchstens 4 Hydroxylgruppen aufweisen. Die zahlenmittlere Funktionalität der Mischung aus Polyol und Polyethercarbonatpolyol sollte höchstens 2,1 beträgt.

Selbstverständlich können auch Gemische aus mehreren Polyolen verwendet werden.

Die Polyole umfassen die Gruppe:

Propandiol-1,2, Propandiol-1,3, Glycerin, Butandiol-2,3, Butandiol-1,3, 2-Methylpropandiol-1,3, Pentandiol-1,2, Pentandiol-1,3, Pentandiol-1,4, Pentandiol-1,5, 2,2-Dimethyl-propandiol-1,3, 2-Methylbutandiol-1,4, 2-Methylbutandiol-1,3, 1,1,1-Trimethylolethan, 3-Methyl-1,5-Pentandiol, 1,1,1-Trimethylolpropan, 1,7-Heptandiol, 2-Ethyl-1,6-Hexandiol, 1,9-Nonandiol, 1,11-Undecandiol, Diethylenglykol, Triethylenglykol, Oligoethylenglykol, 2,2'-Thiodiglykol, aus 1,2-Propylenoxid hergestellten Di- bzw. Polyglykole, Propylenglykole, Di-, Tri- und Tetrabutylenglykol, Di-, Tri- und Tetrahexylenetherglykol, 1,4-Cyclohexandiol, 1,3-Cyclohexandiol sowie Umsetzungsprodukte der vorgenannten Verbindungen mit Ethylen- und/oder Propylenoxid.

Die Polyethercarbonatpolyole auf Basis von Hexandiol und Hexandiolether sind bevorzugt. Die Hexandiolether haben vorzugsweise ein Molekulargewicht von 150 bis 500 g/mol. Das molare Verhältnis der Ethergruppen zu den Carbonatgruppen beträgt vorzugsweise 3:1 bis 1:3.

Die Polyole werden vorzugsweise dem Polyethercarbonatpolyol bei erhöhter Temperatur zugefügt. Die Temperatur liegt bevorzugt oberhalb des Schmelzpunktes des Polyethercarbonatpolyols und des Schmelzpunktes der zugesetzten Polyole. Die Temperatur sollte jedoch vorzugsweise einen Wert, der durch die folgende Formel wiedergegeben wird, nicht überschreiten:

$$(ERT - 50) * RZ \leq 1500$$

mit ERT = Zahlenwert der Einrührtemperatur in [°C] und

RZ = Zahlenwert der Rührzeit in Minuten.

Nach dem Einbringen der Polyole in das Polyethercarbonatpolyol wird auf Lagertemperatur abkühlt oder die erhaltene Mischung der weiteren Umsetzung mit Polyisocyanat zugeführt.

Zur Herstellung von Prepolymeren kann die Mischung aus Polyol und Polyethercarbonatpolyol in der dem Fachmann bekannten Weise, z.B. mit 4,4'-Diphenylmethandiisocyanat (z.B. Desmodur® 44 M, von Bayer MaterialScience AG) bei erhöhter Temperatur (in der Regel im Bereich von 50 bis 100°C), vorzugsweise unter Verwendung eines Schutzgases, zu einem NCOendständigen Prepolymer umgesetzt werden. Die eingesetzten Mischungen aus Polyol und Polyethercarbonatpolyol weisen vorzugsweise eine Hydroxylzahl von 27 bis 113 mg KOH/g auf und der NCO-Gehalt der erhaltenen Prepolymere beträgt bevorzugt 5 bis 15 Gew.% NCO.

Die NCO-Prepolymere werden bei der Herstellung von geschäumten und nicht geschäumten Polyurethanen eingesetzt.

Die vorliegende Erfindung soll anhand der nachfolgenden Beispiele näher erläutert werden.

**Beispiele**

**Beispiel 1**: Herstellung eines Polyetherpolyols (Vorstufe für das Polyethercarbonatpolyol)

240 kg (2069 Mol) aufgeschmolzenes Hexandiol wurden in einem 300 Liter VA-Kessel mit Kolonne und Azeotrop-Aufsatz, Rückflusskühler und Destillatvorlage unter Rühren mit 2,5 kg 35 %ige wässrige 1,5-Naphthalindisulfonsäure und 10 kg Toluol vermischt. Die Temperatur wurde auf 170°C erhöht. Man destillierte im Verlauf von 10 Std. unter leichtem Stickstoffstrom 22 kg Wasser ab. Es wurde auf 100°C abgekühlt, evakuiert und unter Vakuum 10 kg destilliertes Wasser eingezogen. Nach Abkühlen des Kesselinhaltes auf 30°C wurden 0,908 kg 32 %ige wässrige Natronlauge zugegeben und im Verlauf von 2 Std. auf 100°C erhitzt. Man rührte 1 Std. bei 100°C nach, kühlte auf 50°C ab und gab 104 g konzentrierte wässrige Natriumhydrogencarbonat zu, rührte für weitere 30 min. bei dieser Temperatur gut durch. Der pH-Wert betrug 6,4 und die Säurezahl 0,05 mgKOH/g.

Anschließend wurde erneut auf 30°C abgekühlt und 44 kg 10 %ige wässrige Kochsalzlösung intensiv eingerührt. Nach Abstellen des Rührers trennten sich die Phasen innerhalb von ca. 30 min; die untere Phase wurde abgelassen. Das im Kessel verbliebene Produkt wurde durch Anlegen von Vakuum (1 mbar) bei 140°C für 3 Std. entwässert und auf 80°C abgekühlt. Man filtrierte in 40 Minuten über ein mit einer Supra 5500 Filterplatte ausgerüsteten Seitzfilter. Ausbeute: 190 kg.

Der Wassergehalt des Produktes betrug 0,02 %, die Hydroxylzahl war 466 mg KOH/g und die Säurezahl 0,05 mg KOH/g.

**Beispiel 2:** Herstellung des Polyethercarbonatpolyols

3000 g Polyetherpolyol auf Basis Hexandiol mit einer OH-Zahl von 466, hergestellt nach dem in Beispiel 1 beschriebenen Verfahren, wurden mit 1107 g Hexandiol und 4157 g Diphenylcarbonat unter Einsatz von 150 mg Magnesiumcarbonathydroxid-pentahydrat (Fa. Aldrich) umgesetzt. Hierbei erhitzte man das Reaktionsgemisch für eine Stunde auf 180°C, kühlte auf 120°C ab, steigerte die Temperatur im Verlauf von 6 Stunden auf 200°C, wobei der Druck ab ca. 120°C 15 mbar betrug. Zur Vervollständigung der Reaktion wurde bei 200°C und einem Druck von < 1 mbar für 2 Std. nachgerührt. Man destillierte insgesamt 3652 g Phenol ab. Zur Neutralisation des basischen Magnesiumkatalysators wurden 175 mg konzentrierte Schwefelsäure zugesetzt. Die OH-Zahl des Polyethercarbonatpolyols betrug 53 mg KOH/g, die Säurezahl 0,12 mg KOH/g und die Viskosität 1100 mPas (75°C). Die Bestimmung der Endgruppen ergab für "Phenylcarbonato" einen Gehalt von <0,01 %, für "Phenoxy" 0,14 % sowie für freies Phenol 0,02 %.

**Beispiel 3:** Herstellung eines sedimentionsstabilen NCO-Prepolymeren (erfindungsgemäß)

2750,5 g Polyethercarbonatpolyol aus Beispiel 2 mit einer Hydroxylzahl von 53 mg KOH/g wurden mit 16,6 g Pentandiol-1,5 bei 60°C für 0,5 Stunden verrührt. Man gab diese Mischung zu 1732,9 g auf 50°C vorgewärmtes 4,4'-Diphenylmethandiisocyanat (Desmodur® 44M der Fa. Bayer MaterialScience AG) und verrührte für 2 Stunden bei 80°C.
Man bestimmte den NCO-Gehalt zu 9,99 Gew.-% NCO (Theorie 10,0 Gew.-%), die Viskosität zu 1990 mPas (70°C) und lagerte bei Raumtemperatur.
Nach einer Lagerzeit von 10 Wochen wies das NCO-Prepolymer kein Sediment auf.

**Beispiel 4:** Herstellung eines sedimentationsstabilen NCO-Prepolymeren (erfindungsgemäß)

307,4 g Polyethercarbonatpolyol aus Beispiel 2 mit einer Hydroxylzahl von 53 mg KOH/g wurden mit 1,9 g 3-Methyl-Pentandiol-1,5 bei 60°C für 0,5 Stunden verrührt. Man gab diese Mischung zu 190,9 g auf 50°C vorgewärmtes 4,4'-Diphenylmethandiisocyanat (Desmodur® 44M der Fa. Bayer MaterialScience AG) und verrührte für 2 Stunden bei 80°C.
Man bestimmte den NCO-Gehalt zu 9,90 Gew.-% NCO (Theorie 10,0 Gew.-%), die Viskosität zu 2090 mPas (70°C) und lagerte bei Raumtemperatur.
Nach einer Lagerzeit von 10 Wochen wies das NCO-Prepolymer kein Sediment auf.

**Beispiel 5:** Herstellung eines sedimentationsstabilen NCO-Prepolymeren (erfindungsgemäß)

307,2 g Polyethercarbonatpolyol aus Beispiel 2 mit einer Hydroxylzahl von 53 mg KOH/g wurden mit 1,9 g Neo-Pentylglykol bei 60°C für 0,5 Stunden verrührt. Man gab diese Mischung zu 190,9 g auf 50°C vorgewärmtes 4,4'-Diphenylmethandiisocyanat (Desmodur® 44M der Fa. Bayer MaterialScience AG) und verrührte für 2 Stunden bei 80°C.
Man bestimmte den NCO-Gehalt zu 9,91 Gew.-% NCO (Theorie 10,0 Gew.-%), die Viskosität zu 2170 mPas (70°C) und lagerte bei Raumtemperatur.
Nach einer Lagerzeit von 10 Wochen wies das NCO-Prepolymer kein Sediment auf.

**Beispiel 6:** Herstellung eines NCO-Prepolymeren (Vergleich)

186,4 g 4,4'-Diphenylmethandiisocyanat (Desmodur® 44M, Bayer MaterialScience AG) wurden bei 50°C unter Stickstoff vorgelegt, mit 313,6 g des Polyethercarbonatpolyols aus Beispiel 2 versetzt und für 2 Std. bei 80°C gerührt. Man bestimmte den NCO-Gehalt zu 9,95 Gew.-% NCO, die Viskosität bei 70°C betrug 1890 mPas. Das Produkt zeigte bereits direkt nach der Herstellung eine leichte Trübung. Nach 2 Tagen Lagerung bei Raumtemperatur beobachtete man eine weiter zunehmende Eintrübung. Nach 4 Wochen Lagerung wies das Produkt ein deutlich erkennbares Sediment auf.

**Patentansprüche**

1. Verfahren zur Herstellung von bei Raumtemperatur lager- und sedimentationsstabilen NCO-terminierten Prepolymeren mit einem NCO-Gehalt von 5 bis 15 Gew.-% auf Basis von Polyethercarbonatpolyolen und 4,4'-Diphenylmethandiisocyanat, **dadurch gekennzeichnet, dass**

   a) mindestens ein Polyethercarbonatpolyol mit einem Molekulargewicht von 1000 bis 4000 g/mol mit mindestens einem Polyol aus der Gruppe bestehend aus
   Propandiol-1,2, Propandiol-1,3, Glycerin, Butandiol-2,3, Butandiol-1,3, 2-Methylpropandiol-1,3, Pentandiol-1,2, Pentandiol-1,3, Pentandiol-1,4, Pentandiol-1,5, 2,2-Dimethyl-propandiol-1,3, 2-Methylbutandiol-1,4, 2-Methylbutandiol-1,3, 1,1,1-Trimethylolethan, 3-Methyl-1,5-Pentandiol und dessen Strukturisomere, 1,1,1-Trimethylolpropan, 1,7-Heptandiol, 2-Ethyl-1,6-Hexan-diol, 1,9-Nonandiol, 1,11-Undecandiol, Diethylenglykol, Triethylenglykol, Oligoethylenglykol, 2,2'-Thiodiglykol, aus 1,2-Propylenoxid hergestellten Di- bzw. Polyglykole, Propylenglykole, Di-, Tri- und Tetrabutylenglykol, Di-, Tri- und Tetrahexylenetherglykol, 1,4-Cyclohexandiol, 1,3-Cyclohexandiol, sowie Umsetzungsprodukte der vorgenannten Verbindungen mit Ethylen- und/oder Propylenoxid im Molverhältnis von 1:1 bis 1:5,
vermischt wird, wobei die Mischung eine Hydroxylzahl aufweist, die um mindestens 1,5 und höchstens 15 Hydroxylzahleinheiten höher ist als die des Polyethercarbonatpolyols und
b) dieses Gemisch anschließend mit einem stöchiometrischen Überschuss an 4,4'-Diphenylmethandiisocyanat umgesetzt wird.

2. Bei Raumtemperatur lager- und sedimentationsstabile NCO-terminierte Prepolymere mit einem NCO-Gehalt von 5 bis 15 Gew.-% auf Basis von Polyethercarbonatpolyolen und 4,4'-Diphenylmethandiisocyanat, erhältlich durch Umsetzung von

a) mindestens ein Polyethercarbonatpolyol mit einem Molekulargewicht von 1000 bis 4000 g/mol mit mindestens einem Polyol aus der Gruppe bestehend aus
Propandiol-1,2, Propandiol-1,3, Glycerin, Butandiol-2,3, Butandiol-1,3, 2-Methylpropandiol-1,3, Pentandiol-1,2, Pentandiol-1,3, Pentandiol-1,4, Pentandiol-1,5, 2,2-Dimethyl-propandiol-1,3, 2-Methylbutandiol-1,4, 2-Methylbutandiol-1,3, 1,1,1-Trimethylolethan, 3-Methyl-1,5-Pentandiol und dessen Strukturisomere, 1,1,1-Trimethylolpropan, 1,7-Heptandiol, 2-Ethyl-1,6-Hexandiol, 1,9-Nonandiol, 1,11-Undecandiol, Diethylenglykol, Triethylenglykol, Oligoethylenglykol, 2,2'-Thiodiglykol, aus 1,2-Propylenoxid hergestellten Di- bzw. Polyglykole, Propylenglykole, Di-, Tri- und Tetrabutylenglykol, Di-, Tri- und Tetrahexylenetherglykol, 1,4-Cyclohexandiol, 1,3-Cyclohexandiol, sowie Umsetzungsprodukte der vorgenannten Verbindungen mit Ethylen- und/oder Propylenoxid im Molverhältnis von 1:1 bis 1:5, wobei die Mischung eine Hydroxylzahl aufweist, die um mindestens 1,5 und höchstens 15 Hydroxylzahleinheiten höher ist als die des Polyethercarbonatpolyols mit
b) einem stöchiometrischen Überschuss an 4,4'-Diphenylmethandiisocyanat.

3. Verwendung der gemäß Anspruch 1 erhältlichen NCO-Prepolymeren zur Herstellung von geschäumten und nicht geschäumten Polyurethanwerkstoffen.

## Claims

1. Process for the production of NCO-terminated prepolymers having an NCO content of from 5 to 15 wt. % that are based on polyether carbonate polyols and 4,4'-diphenylmethane diisocyanate and are stable to storage and sedimentation at room temperature, **characterised in that**

a) at least one polyether carbonate polyol having a molecular weight of from 1000 to 4000 g/mol is mixed with at least one polyol from the group consisting of
1,2-propanediol, 1,3-propanediol, glycerol, 2,3-butanediol, 1,3-butanediol, 2-methyl-1,3-propanediol, 1,2-pentanediol, 1,3-pentanediol, 1,4-pentanediol, 1,5-pentanediol, 2,2-dimethyl-1,3-propanediol, 2-methyl-1,4-butanediol, 2-methyl-1,3-butanediol, 1,1,1-trimethylolethane, 3-methyl-1,5-pentanediol and its structural isomers, 1,1,1-trimethylolpropane, 1,7-heptanediol, 2-ethyl-1,6-hexanediol, 1,9-nonanediol, 1,11-undecanediol, diethylene glycol, triethylene glycol, oligoethylene glycol, 2,2'-thiodiglycol, di- or poly-glycols prepared from 1,2-propylene oxide, propylene glycols, di-, tri- and tetra-butylene glycol, di-, tri- and tetra-hexylene ether glycol, 1,4-cyclohexanediol, 1,3-cyclohexanediol, as well as reaction products of the above-mentioned compounds with ethylene oxide and/or propylene oxide in a molar ratio of from 1:1 to 1:5,
wherein the mixture has a hydroxyl number which is higher than the hydroxyl number of the polyether carbonate polyol by at least 1.5 and not more than 15 hydroxyl units, and
b) the mixture is subsequently reacted with a stoichiometric excess of 4,4'-diphenylmethane diisocyanate.

2. NCO-terminated prepolymers having an NCO content of from 5 to 15 wt.% that are based on polyether carbonate polyols and 4,4'-diphenylmethane diisocyanate and are stable to storage and sedimentation at room temperature, obtainable by reaction of

a) at least one polyether carbonate polyol having a molecular weight of from 1000 to 4000 g/mol with at least one polyol from the group consisting of
1,2-propanediol, 1,3-propanediol, glycerol, 2,3-butanediol, 1,3-butanediol, 2-methyl-1,3-propanediol, 1,2-pentanediol, 1,3-pentanediol, 1,4-pentanediol, 1,5-pentanediol, 2,2-dimethyl-1,3-propanediol, 2-methyl-1,4-butanediol, 2-methyl-1,3-butanediol, 1,1,1-trimethylolethane, 3-methyl-1,5-pentanediol and its structural isomers, 1,1,1-trimethylolpropane, 1,7-heptanediol, 2-ethyl-1,6-hexanediol, 1,9-nonanediol, 1,11-undecanediol, diethylene glycol, triethylene glycol, oligoethylene glycol, 2,2'-thiodiglycol, di- or poly-glycols prepared from 1,2-propylene oxide, propylene glycols, di-, tri- and tetra-butylene glycol, di-, tri- and tetra-hexylene ether glycol, 1,4-cyclohexanediol, 1,3-cyclohexanediol, as well as reaction products of the above-mentioned compounds with ethylene oxide and/or propylene oxide in a molar ratio of from 1:1 to 1:5, wherein the mixture has a hydroxyl number which is higher than the hydroxyl number of the polyether carbonate polyol by at least 1.5 and not more than 15 hydroxyl units, with

b) a stoichiometric excess of 4,4'-diphenylmethane diisocyanate.

**3.** Use of the NCO prepolymers obtainable according to claim 1 in the production of foamed and non-foamed polyurethane materials.

## Revendications

**1.** Procédé pour la préparation de prépolymères NCO-terminés stables au stockage et à la sédimentation à température ambiante avec une teneur NCO de 5 à 15 % en poids à base de polyéthercarbonatepolyols et de diisocyanate de 4,4'-diphénylméthane, **caractérisé en ce que**

a) on mélange au moins un polyéthercarbonatepoyol avec un poids moléculaire de 1 000 à 4 000 g/mol avec au moins un polyol du groupe constitué de propanediol-1,2, propanediol-1,3, glycérine, butanediol-2,3, butanediol-1,3, 2-méthylpropanediol-1,3, pentanediol-1,2, pentanediol-1,3, pentanediol-1,4, pentanediol-1,5, 2,2-diméthyl-propanediol-1,3, 2-méthylbutanediol-1,4, 2-méthylbutanediol-1,3, 1,1,1-triméthyloléthane, 3-méthyl-1,5-pentanediol et leurs isomères de structure, 1,1,1-triméthylolpropane, 1,7-heptanediol, 2-éthyl-1,6-hexanediol, 1,9-nonanediol, 1,11-undécanediol, diéthylèneglycol, triéthylèneglycol, oligoéthylèneglycol, 2,2'-thiodiglycol, di- respectivement polyglycols préparés à partir d'oxyde de 1,2-propylène, propylèneglycols, di-, tri- et tétrabutylèneglycol, di-, tri- et tétrahexylèneéétherglycol, 1,4-cyclohexanediol, 1,3-cyclohexanediol ainsi que produits de réaction des composés cités précédemment avec de l'oxyde d'éthylène et/ou de propylène dans un rapport molaire de 1 : 1 à 1 : 5, le mélange présentant un indice hydroxyle qui est d'au moins 1,5 et d'au plus 15 unités d'indice hydroxyle supérieur à celui du polyéthercarbonatepolyol et

b) on fait ensuite réagir ce mélange avec un excès stoechiométrique de diisocyanate de 4,4'-diphénylméthane.

**2.** Prépolymères NCO-terminés stables au stockage et à la sédimentation à température ambiante avec une teneur NCO de 5 à 15 % en poids à base de polyéthercarbonatepolyols et de diisocyanate de 4,4'-diphénylméthane, obtenus par réaction de

a) au moins un polyéthercarbonatepolyol avec un poids moléculaire de 1 000 à 4 000 g/mol avec au moins un polyol du groupe constitué de propanediol-1,2, propanediol-1,3, glycérine, butanediol-2,3, butanediol-1,3, 2-méthylpropanediol-1,3, pentanediol-1,2, pentanediol-1,3, pentanediol-1,4, pentanediol-1,5, 2,2-diméthyl-propanediol-1,3, 2-méthylbutanediol-1,4, 2-méthylbutanediol-1,3, 1,1,1-triméthyloléthane, 3-méthyl-1,5-pentanediol et leurs isomères de structure, 1,1,1-triméthylolpropane, 1,7-heptanediol, 2-éthyl-1,6-hexanediol, 1,9-nonanediol, 1,11-undécanediol, diéthylèneglycol, triéthylèneglycol, oligoéthylèneglycol, 2,2'-thiodiglycol, di-respectivement polyglycols préparés à partir d'oxyde de 1,2-propylène, propylèneglycols, di-, tri- et tétrabutylèneglycols, di-, tri- et tétrahexylèneéétherglycol, 1,4-cyclohexanediol, 1,3-cyclohexanediol ainsi que produits de réaction des composés cités précédemment avec de l'oxyde d'éthylène et/ou de propylène dans un rapport molaire de 1 : 1 à 1 : 5, le mélange présentant un indice hydroxyle qui est d'au moins 1,5 et d'au plus 15 unités d'indice hydroxyle supérieur à celui du polyéthercarbonatepolyol, avec

b) un excès stoechiométrique de diisocyanate de 4,4'-diphénylméthane.

**3.** Utilisation des prépolymères NCO obtenus selon la revendication 1 pour la préparation de matières de polyuréthane expansées et non expansées.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4808691 A